# EUROPEAN PATENT APPLICATION

(11) **EP 4 744 751 A1**
(43) Date of publication of application: **20.05.2026**
(21) Application number: 25214444.9
(22) Date of filing: 07.11.2025
(51) Int. Cl.: B01D 3/12, B01D 5/00, B01D 3/00, B01D 3/30, B01D 3/42

(54) **INTERNAL REFLUX DISTILLATION COLUMN WITH INTERNAL ROTATING HEAT EXCHANGER**

(30) Priority: 08.11.2024 IT 202400025191; 16.01.2025 IT 202500000648
(71) Applicant: POLARIS Srl, 20900 Monza MB (IT)
(72) Inventor: MASETTO, Gian Claudio, 20900 Monza (IT)
(74) Representative: Premru, Rok

(57) **Abstract**

The system relates to an internal-reflux distillation column that integrates a rotating heat exchanger as the structured filling. The column (container 10) is a vertical vessel (axis X) with a lower vapour inlet, a condensate outlet, and a top vapour outlet (15) connected to an external condenser (22). A distillate-reflux inlet (18) near the head allows part of the condensed product to be returned to the column. A heat exchanger (5) is mounted inside on a shaft (6) that rotates around axis X, driven by a motor (60); it operates in counter-current mode with a refrigeration fluid supplied through internal ducts (610,620). The rotor may be a finned tube, the fins having a helical structure.The system is suitable for batch or continuous fractional distillation of multicomponent mixtures in pharmaceutical, fine-chemical, biotech and food processes.

## Description

### Technical Field

An internal reflux distillation column, hereinafter briefly referred to as IRC (Internal Reflux Column), is described below.

In particular, an internal reflux distillation column comprising a rotating heat exchanger is described.

In particular, the internal reflux distillation column described below is particularly suitable for carrying out multicomponent liquid mixtures batch fractional distillation processes.

The distillation column in question can also be used in some continuous fractional distillation processes, for example in the distillation processes for distilling a mixture of two organic compounds that do not form an azeotrope.

The distillation column described below can be used in both vacuum distillation processes and pressure distillation processes.

As used herein, the term "fractional distillation" indicates a process in which a multicomponent mixture is subjected to a series of cycles of partial vaporization and subsequent condensation of the vaporized product, heating it to the boiling point and cooling the generated vapour phase, operating at different salient temperature levels, in order to obtain the progressive separation, into fractions, of the individual evaporated components, then brought back to the liquid state and thus collected in sequence.

As used herein, the term "internal reflux distillation column" indicates a distillation column in which the process of refluxing condensed vapours is already carried out inside the column, before the vapours reach the outflow opening, located at the top of the column.

### Background art

It is known to carry out "fractional distillation" processes in which a vapour phase, produced at the bottom of a vertical column by heating to the boiling point a multicomponent liquid mixture present therein and which rises from the bottom up the column, is repeatedly subjected to partial condensation and re-evaporation, cooling and successively heating it operating at different salient temperature levels, in order to progressively obtain the separate condensation, into fractions, of the individual components gradually evaporated according to their respective volatility, then brought back to the liquid state and thus collected in sequence.

The distillation columns, used to carry out the fractional distillation processes, are divided into "external reflux" distillation columns and "internal reflux" distillation columns.

In the external reflux distillation columns, the fractional condensation of the vapour produced in the column is carried out in an external condenser, and the produced cold condensate is refluxed back from the external condenser to the top of the column.

In the internal reflux distillation columns, the condensed vapours condensation and reflux process is carried out inside the column, before the vapours reach the outflow opening (located at the top of the column).

The internal reflux distillation columns comprise therein a heat exchanger with a predominantly vertical structure, fed from above with a suitable refrigeration fluid, adapted to cool the rising vapour so as to cause a gradual condensation inside the column of the various components present in the vapour state based on their volatility.

Thanks to the heat exchanger which is present inside the column, the rising vapour flow is progressively enriched with the more volatile components, while the flow of the produced descending condensed liquid is progressively enriched with the less volatile components.

This flow of condensed liquid falling toward the bottom makes up the "internal reflux."

Internal reflux distillation columns are used, for example, to recover the solvents contained in mixtures formed during pharmaceutical manufacturing processes in order to properly meet the stringent quality requirements for allowing their reuse.

The patents EP 0513704 B1 and US 5296103 A by Gian Claudio Masetto, the inventor of the present patent application, disclose an internal reflux distillation column.

This distillation column comprises therein a stationary heat exchanger, which also performs the function of structured filling, thus improving the efficiency of the distillation.

As used herein, the term " structured filling " indicates a filling in which the individual elements have a specific, fixed orientation relative to each other and to the column axis.

The heat exchanger described in the aforementioned prior patents comprises a plurality of finned tubes having a cylindrical helical extension, with extension axes parallel to each other and parallel to the extension axis of the distillation column.

The finned tubes are fed, in parallel with each other, with a refrigeration fluid, fed into the upper end and discharged from the lower end (so as to carry out an indirect heat exchange in countercurrent with the vapour rising inside the distillation column).

Each finned tube develops around an internal (central) support tube, with its development axis parallel to the vertical axis of the distillation column, and is contained in a tube coaxial to the development axis of the finned tube and to the internal tube.

The vapour phase which rises along the distillation column is divided into a plurality of flows which vertically cross the annular cross-section space in which each finned tube is contained.

The vapour which comes into contact with the external surface of the finned tubes progressively cools and its less volatile components tend to condense on this surface and descend (by gravity) downwards.

While descending, the condensate already produced in the column comes into contact with other vapour which is rising, contributing to the condensation of the less volatile components present there, and consequently to the relative increase in the concentration of the more volatile components which remain in the vapour phase (mass and heat exchange between the condensed phase and the surrounding vapour).

The condensates of the vapours produced in sequence are refluxed towards the bottom of the column.

As the process continues, the remaining part of the vapours gradually produced continues to rise inside the column until it flows out from the upper end of the column, continuously modified, gradually depleted of the less volatile components present in the original mixture, but enriched with the more volatile components.

The flown out vapours are condensed in an external condenser and are subsequently refluxed from the external condenser to the top of the column to be further fractionated if their composition does not comply with the process specification, as can be detected by the non-compliance of the column head temperature with the theoretical boiling point at the process pressure.

The process continues until the column has exhausted all the components needed for their recovery, in compliance with the required quality specification.

In order to increase the efficiency of the mixture fractionation, the highest-boiling condensed fraction still present at the bottom of the column can then be brought back to the vapour phase, further raising the bottom temperature to recover any more volatile components still present (the so-called "tail reflux").

However, the currently known internal reflux distillation columns, such as the one described in EP 0 513 704 B1, have some aspects that could be improved.

For example, it would be desirable to obtain a distillate of adequately high quality with reduced process times.

Furthermore, there is a need to reduce the size, and in particular the height, of the internal reflux distillation columns, without compromising the efficiency of fractionation.

There is also a need to reduce the distillation process times, without compromising the efficiency of fractionation..

There is also a need to reduce the size, and in particular the height, of the internal reflux distillation columns, without compromising the efficiency of fractionation.

### Summary

An internal reflux distillation column and an internal reflux distillation method are described which are capable of at least partially overcoming the drawbacks of the prior art and in particular the drawbacks indicated above.

In particular, an internal reflux distillation column which is capable of achieving high yields is described.

Even more specifically, an internal reflux distillation column is described, with improved efficiency characteristics, although smaller in height, so that the column can be installed even inside industrial buildings, at the plant's base, better integrated with the production process units.

### Brief description of the drawings

Some possible embodiments of an internal reflux distillation column are illustrated in the attached figures in which:
- Figure 1 is a sectional schematic representation of an internal reflux distillation column with a rotating heat exchanger;
- Figure 2 shows a portion of a tube provided with a constant pitch finning used to provide the heat exchanger of the distillation column of Figure 1;
- Figure 3 shows a rotating heat exchanger comprising two finned tubes, wound around a rotating shaft;
- Figure 4 is an enlarged view of a detail of Figure 3;
- Figure 5 is a sectional view showing the hydraulic connections required to feed the finned tubes of the rotating heat exchanger;

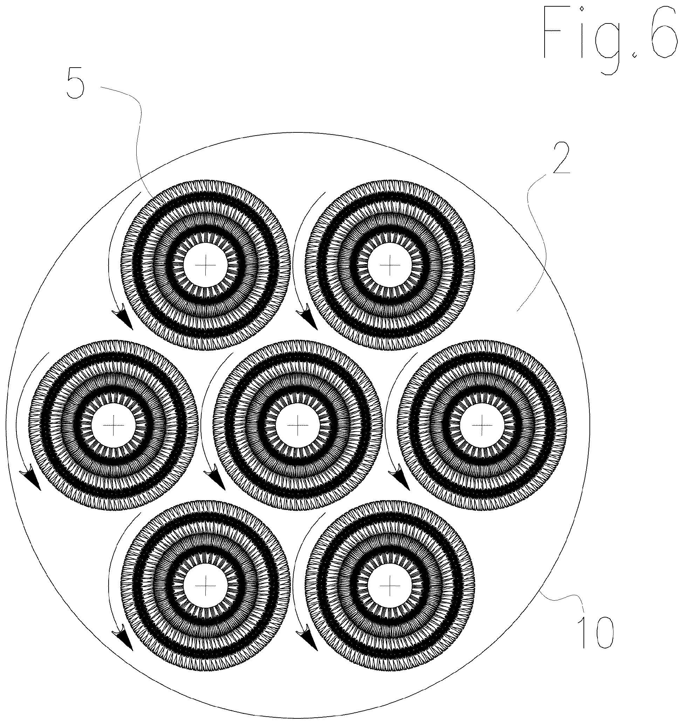

- Figure 6 is a top sectional schematic view showing a second embodiment of an internal reflux distillation column which includes a plurality of heat exchangers rotating around as many shafts; and

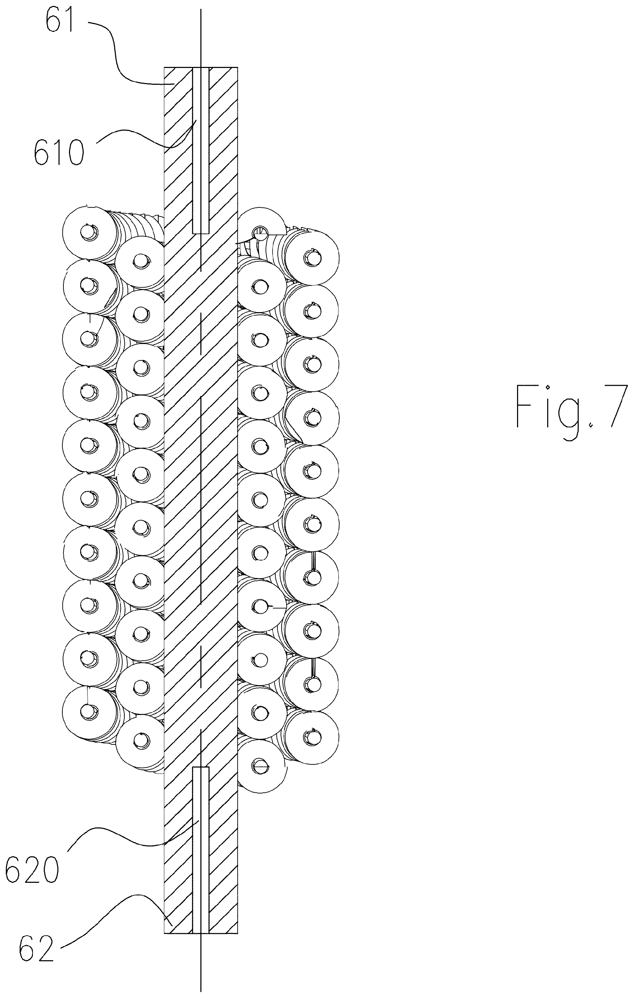

- Figure 7 is a sectional view of the shaft on which the rotating heat exchanger is mounted.

### Detailed description

With reference to the numbering used in the attached figures, number 1 indicates, as a whole, an internal reflux distillation column suitable for operation in batch mode.

The distillation column 1 comprises a metal container 10 extending along a vertical axis X.

The container 10 is a cylindrical, or in any case substantially and/or essentially cylindrical, container having a lower end or bottom 11 and an upper end or head or top 12, which is opposite the lower end 11.

The container 10, therefore, defines a cylindrical or in any case substantially and/or essentially cylindrical chamber 2.

In the shown example, the distillation column is not provided with means (such as coils crossed by hot water or electrical resistances) to heat the wall of the container 10.

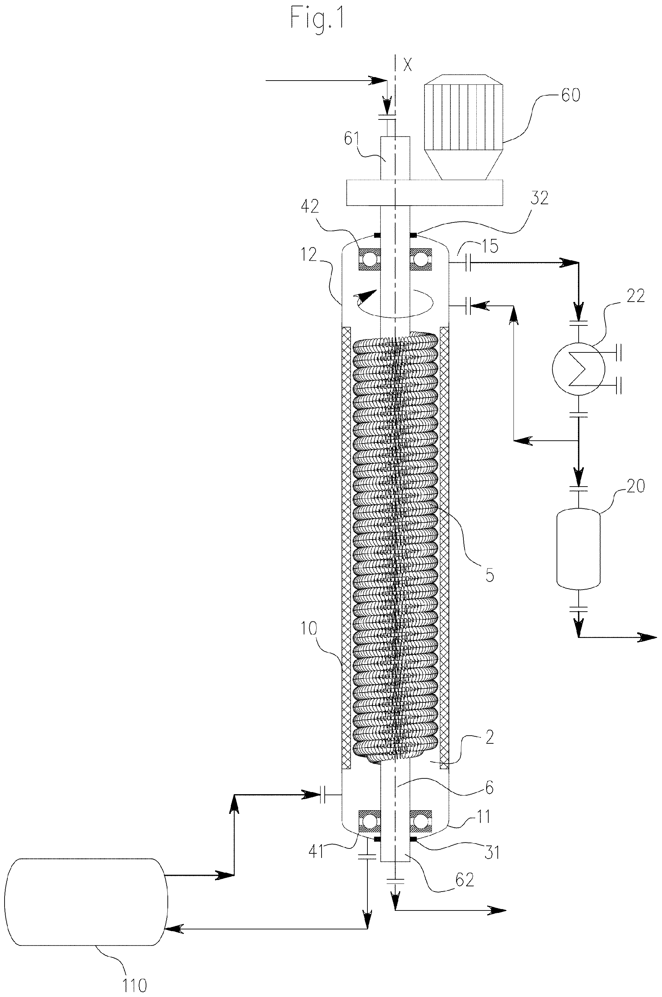

In the example in Figure 1, the lower end 11 of the column 1 is in communication with a conventional boiler 110 containing the mixture to be distilled.

The column 1 is, therefore, fed with a flow of vapour which is produced by the boiler 110, and fed into the column 1 through the lower end 11.

The distillation column 1 comprises a vapour outflow opening 15, placed at the head 12 of the column.

The vapour outflow opening 15 is in communication, through a duct, with the entry of a conventional vapour condenser 22.

The vapour coming from the opening 15 and fed into the vapour condenser is condensed and becomes the distilled product.

The refrigeration fluid used for the operation of the vapour condenser 22 can vary according to needs.

The distilled product exiting the vapour condenser 22 can be then stored in a conventional tank 20.

In a possible embodiment (see Figure 1), the distillation column 1 comprises a distillate inflow opening 18, positioned near the top 12 of the column 1, to reflux a portion of the distillate exiting the vapour condenser 22 to the column.

Feeding a portion of the distillate into the distillation column 1 serves to improve the efficiency of the separation between the components of the mixture.

The percentage of the distilled liquid coming from the vapour condenser 22 which is refluxed to the column through the opening 18 can be regulated using automatic flow control valves (not shown).

The distillation column 1 comprises at least one temperature sensor (not shown) for checking and controlling the distillation process.

In particular, at least one temperature sensor can be positioned at the top, or upper end 12 of the column 1, for measuring the temperature of the vapour coming out of the opening 15.

The information relating to the temperature of the outgoing vapour allows to check the distillate composition.

The information relating to the temperature of the vapour coming out of the opening 15 can be used to regulate the distillation process and, in particular, to regulate the quantity of distillate that is reintroduced into the column 1 through the inflow opening 18.

The distillation column can also comprise at least one pressure sensor to ensure safety, efficiency and control of the component separation.

In the embodiment of Figure 1, a heat exchanger 5 fed with a refrigeration fluid, for example water or a salt solution, is provided inside the container 10.

The heat exchanger 5 extends along the axis X.

The vapour that comes into contact with the heat exchanger 5 progressively cools and its less volatile components tend to condense and descend (by gravity) towards the bottom 11, or lower end, of the column 1, while the more volatile components continue to rise until they exit from the top 1.

While descending inside the chamber 2, the condensate comes into contact with the vapour which is rising, contributing to the condensation of the less volatile components present into the vapour, and consequently to the relative increase in the concentration of the more volatile components which remain in the vapour phase (mass and heat exchange between the condensed phase and the surrounding vapour).

An internal reflux, rich in the less volatile components of the processed mixture, is thus created inside the column 1, which descends towards the bottom 11 of the column 1, and returns to the boiler 110 while, conversely, the more volatile components of the vapour tend to remain in the vapour state until they exit from the top 12 of the column 1 through the outflow opening 15.

The distilled product can be even also partially reintroduced in the head 12 of the column 10, in order to further enhance the percentage of the more volatile components of the distilled product.

The high-boiling residue present in the boiler 110 continues to boil, thus further reducing the percentage of less volatile components in the residual product.

All the components of the column 1 intended to come into contact with the process fluids (including the heat exchanger 5) are designed and manufactured to withstand the operating pressure and vacuum and are able to resist corrosion of the processed compounds.

The diameter and height of the container 10 can vary depending on the required performance.

The heat exchanger 5 also provides a structured filling, which facilitates the energy and mass exchange between the two phases inside the column 1.

The heat exchanger 5 is made of a metal material with adequate corrosion resistance.

In the shown example, the heat exchanger 5 is a heat exchanger adapted to operate in countercurrent.

The refrigeration fluid therefore flows essentially downward inside the column 1, that is to say in a substantially opposite direction to the vapours rising inside the column 1.

The fact that the heat exchanger 5 is a heat exchanger which is adapted to operate in countercurrent further enhances the efficiency of the energy and mass exchange during the distillation process.

A characteristic of the heat exchanger 5 is that it is adapted to rotate around the axis X of the container 10.

The rotation of the heat exchanger 5 around the axis X further increases the heat energy and mass exchange in the contact zone between the ascending vapour and the descending condensate, thus further enhancing the efficiency of the distillation process.

In the example shown in Figure 1, the heat exchanger 5 is integral with a shaft 6 extending along the axis X.

The shaft 6 is then connected to an electric motor 60.

In the shown example, the motor 60 is placed outside the container 10, for example on the head 12.

The shaft 6 comprises a first end, or upper end 61, and a second end, or lower end 62.

The shaft 6 comprises a first duct or blind axial hole 610, which starts from the first end 61, and a second duct or blind axial hole 620, which starts from the second end 62.

The heat exchanger 5 is fed with the refrigeration fluid through the first end 61 of the shaft 6, while the fluid exiting the heat exchanger 5 is discharged through the second end 62.

A rotary joint, not shown, may be provided to feed the refrigeration fluid, positioned at the upper end 61 of the shaft 6.

A further rotary joint (also not shown), may be provided at the lower end 62 of the shaft 6.

As the shaft 6 passes through both the head 12 and the bottom 11 of the container 10, suitable sealing members 31, 32 must be provided to isolate the chamber 2 of the column 1 from the external environment.

In the shown example, suitable support members 41, 42, placed inside the container 10, are also provided to support the shaft 6 and the heat exchanger 5 during the rotation inside the container 10.

In the shown example, the support members 41, 42 comprise at least one bearing, such as a rolling bearing or a plain bearing.

Preferably, at least two bearings 41, 42, positioned near the head 12 and the bottom 11, respectively, of the container 10 are provided.

In the shown example, the heat exchanger 5 occupies an approximately and/or substantially cylindrical volume and is coaxial with the axis X of the shaft 6.

A device may then be provided to regulate the rotational speed of the shaft 6 and/or the rotational direction of the shaft 6.

The rotation speed and/or the rotational direction of the shaft 6 can be regulated for example using an inverter which directly acts on the motor 60.

As already written, a first duct 610 (inside the shaft 6) is provided to allow the refrigeration fluid to flow into the heat exchanger 5, and a second duct 620 (also inside the shaft 6) is provided to allow the refrigeration fluid to flow out of the heat exchanger 5.

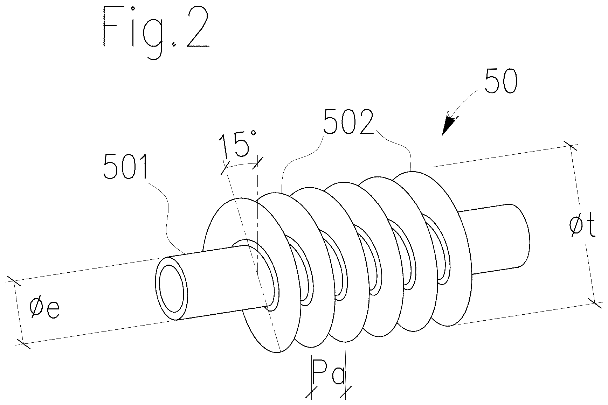

In the shown example, the heat exchanger 5 comprises at least one finned tube 50, that is to say a tube 501 provided with helical metal finning 502, made with a substantially constant pitch (see Figure 2).

The spiral-finned tubes are used for allowing a structured filling to be obtained which has a high specific surface area for the same volume.

The finned tubes are thus used for allowing a large surface area for mutual contact and energy and mass exchange between the vapour and liquid phases, resulting in high efficiency in the mass and energy exchange to obtained.

The helical finning 502 can be obtained by using a metal strip of suitable height and small thickness which is wound edgewise, perpendicularly and continuously, on the external surface of the central tube along a helical spiral path with a substantially constant pitch (this type of finning is also known as helical finning).

The finned tube 50 has a total diameter Φt which depends on the diameter of the central tube 501 and the height of the finning 502, selected based on the performance to be achieved in the process, in terms of capacity and efficiency.

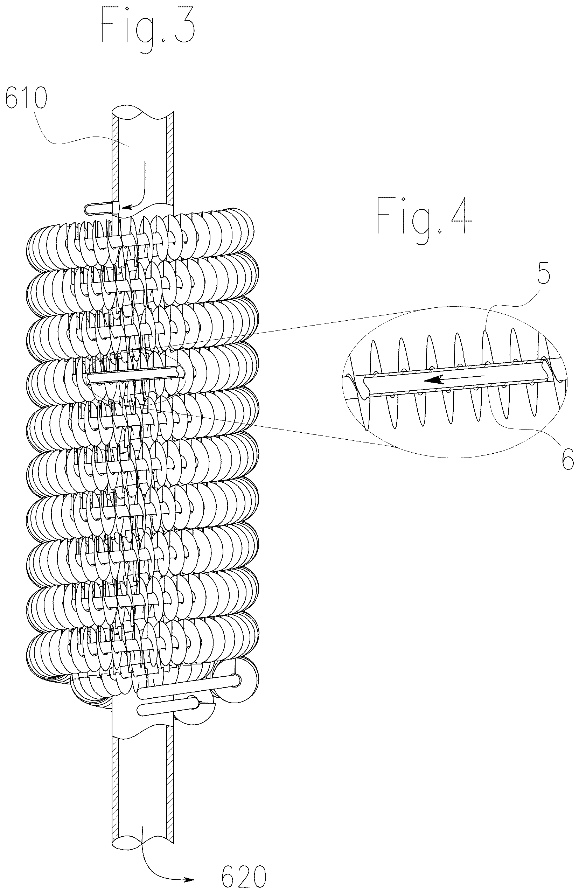

In the illustrated embodiment, the metal tube 50 has a cylindrical helical spiral development with a development axis which is parallel to the axis X of the container 10, the shaft 6, and the column 1 (see Figures 1 and 3).

The finned tube 50 can wind around the shaft 6 in a right direction or in left direction.

The fins 502 can wind around the tube 501 in a right direction or in left direction.

The pitch of the finning 502 can vary as needed.

The methods for producing finned tubes are known to those skilled in the art.

For example, metal tubes 501 with an external 12 mm diameter Φₑ can be used to provide the heat exchanger 5, onto which a 12 mm height metal strip 502 having a thickness of approximately 0.3 - 0.5 mm is wound, creating a spiral finning, maintaining a fin pitch Pₐ of 5 mm.

In this case, the total external diameter Φₜ of the finned tube 1₁, 1₂, ...,1ₙ is approximately 36 mm.

A specific surface area even in the order of 420 m²/m³ can be obtained using finned tubes with these characteristics.

It should also be noted that in a volume of 1 dm³ of the filling unit prepared in this way, an average total length of the outer edges of the fins of the metal strip 502 can be approximately 18 m.

The heat exchanger 5 may include a second finned tube 50 wound in a helical spiral around the first finned tube 50.

The heat exchanger 5 may also comprise a third finned tube (not shown), wound in a helical spiral around the second finned tube 50 (depending on the process requirements).

Additional finned tubes may be provided, concentrically wound in series, one around the other.

This solution allows for enhanced performance, in terms of volumetric capacity and efficiency of the distillation column 1.

In the shown example, the finned tubes 50 are arranged in succession, in increasing sequence, at a constant pitch Pr (for example, with pitch Pr equal to the total external diameter Φₜ) along a direction orthogonal to the axis X.

In a preferred solution, all the finned tubes 50 have the same winding direction as the tube 501 and the same winding direction as the finning 502.

In this further embodiment, each filling tube has a helix pitch Pe along the axis X which is substantially constant, for example a pitch Pe which is substantially equal to the diameter Φₜ of the finned tubular..

When the distillation process begins, the liquid phase formed by condensation from the vapour rising from the bottom, upon contact with the large, refrigerated surface of the (inclined) fins of the finned tubes 50 of the exchanger 5, adheres to it, and due to gravity, tends to flow downward over it.

The vapour phase continuously fed into the column 1 rises in a countercurrent through the heat exchanger 5, passing through the gaps between the adjacent fins 502, and touches the cooler surface of the liquid film that forms on the surface of the fins 502.

This helps effective heat and mass exchange between the vapour and liquid phases.

The rotation of the heat exchanger 5 around the axis X further increases the efficiency of the heat and mass exchange inside the column 1.

The increase in the heat and mass exchange in the column 1 is deemed to be due, at least in part, to the fact that the rotation of the heat exchanger 5 causes continuous changes in the direction of the rising vapour and the descending condensate reflux (changes that also depend on the rotational direction of the heat exchanger 5 as well as its rotational speed).

Given that the heat exchanger 5, as illustrated in Figure 1, comprises one or more finned tubes 50, it is assumed that the phases are forced to follow generally spiral trajectories.

In other words, the rotation of the heat exchanger 5 is deemed to cause an increase in the path length of the (vapour and liquid) phases inside the column and therefore in their residence time and mutual contact time.

It is also deemed that the moderate but continuous shear effect exerted by the edge of the inclined fins 502 of the finned tube 50 on the liquid phase (when the liquid phase, sliding downward over the fins, reaches the edge) causes a dispersion of the liquid phase into the surrounding vapour phase, further enhancing the mass and energy exchange.

In conclusion, the rotation of the heat exchanger 5 inside the column 1 leads to an intimate, intense, continuous, and constantly changing contact between the two phases.

In short, this is what is needed to perform an efficient fractional distillation.

The performance of the column 1 is affected by the rotational speed of the heat exchanger (also known as the structured filling) 5, which in any case must be moderate to avoid excessive centrifugal force and thereby the possible formation of stable emulsions between the process components.

The heat and mass exchange process between the two phases involves the entire volume of the two phases present in the column.

As previously noted, due to the drag effect induced by the rotating fins 502 of the heat exchanger (and structured filling) 5, the two phases tend to follow spiral trajectories inside the column.

Therefore, the path of the phases in the column is greater than the height of the column, and the residence time of the two phases in the column is longer than the one that could be had if the heat exchanger and structured filling 5 were stationary.

The increased residence time of the phases in the container, as well as the fragmentation of the liquid phase already described, enhance the efficiency of the distillation process.

However, the increased residence time of the phases in the column also leads to a reduction in the volumetric capacity of the distillation column 1.

The best rotational speed of the shaft 6, and therefore of the structured filling and heat exchanger 5, is selected on a case-by-case basis based on the chemical and physical characteristics of the components of the mixture to be processed and the purity and flow rate objectives.

In any case, the rotational speed of the shaft 6 is moderate to avoid a significant centrifugal effect (formation of stable emulsions), which is undesirable in the distillation process.

With the distillation column described above, it is possible to carry out a fractional distillation process in which only partial or even no reflux of the distilled product can be provided in the column, and a partial condensation process of the vapours rising inside the column is provided by the heat exchanger 5, placed inside the column and extending along the axis X.

The fact that the heat exchanger 5 is capable of rotating around the vertical axis X allows the distillation process performance to be enhanced.

In particular, remarkable results are obtained when the heat exchanger comprise at least one finned tube 50, having a cylindrical helical spiral development along the vertical development axis X and when the finned tube is passed through by a refrigeration fluid which flows countercurrently to the flow of vapours.

The column 1, as described, is particularly advantageous in the fractionation processes for fractionating multicomponent mixtures.

The mixture to be distilled is at first loaded into the boiler 110 and then heated to vaporization.

The distillation process is carried out at atmospheric pressure, or preferably under vacuum to space the boiling points of the various components, checking the temperature and pressure of the mixture in the vapour phase that reaches the top 12 of the column 1.

For this purpose, at least one temperature sensor and at least one pressure sensor (not shown) are provided to check the temperature and pressure of the mixture in the vapour phase at the top 12 of the column 1.

As the vapour phase rises up the column, it passes through the gaps between the finned tubes 50 of the heat exchanger 5.

The vapour then comes into contact with the cooler surface of the finned tubes 50 and this leads to a heat and energy exchange, producing a liquid condensate which descends through the column 1 and flows down into the boiler 110.

As the vapour rises, the composition of the vapour phase gradually loses its less volatile components.

Therefore, in the vapour phase reaching the top 12 of the column 1, the more volatile components of the mixture predominate, while in the condensate returning to boiler 110, the less volatile components of the mixture predominate.

The vapour reaching the top 12 of the column is vented and condensed outside, and then refluxed into the column until the more volatile components exiting the top 12 reach the desired concentration (a concentration that can be deduced from the temperature and vapour pressure measured at the top 12 of the column).

The column head pressure and temperature values in this fractionation process must obviously be checked with particular rigor, as the distilled component gradually emitted from the column head, condensed and collected outside, is, in principle, the specific component to be collected as it complies with the design purity conditions.

To ensure that the distillate really complies with the required quality specification, it must be characterized by an outlet temperature from the column head that is absolutely equal to the theoretical condensation temperature of the pure component at the set operating pressure; otherwise, it is recycled to the column bottom.

With the column 1 described above, it is also possible to fractionate a two-component mixture into two separate phases by continuously checking the pressure and temperature of the vapour, according to the method already described.

To allow for the greatest operational flexibility, it is advisable to design the column with characteristics suitable for operation under high pressure at high temperatures, as well as under high vacuum, in order to be able to carry out low-temperature distillation processes, operating at extremely low pressures.

As a general rule, all other process conditions being equal, increasing the rotational speed of the shaft 6, and therefore of the heat exchanger and structured filling 5, within certain limits, can positively affect the quality of the fractionation of the processed mixture.

In the illustrated embodiments, the rotational speed of the shaft 6 of the distillation column 1 can range from 30 to 150 rpm.

Preferably, the rotational speed of the shaft 6, and therefore of the heat exchanger 5, ranges from 30 to 120 rpm.

The rotational speed of the shaft 6 also depends on the diameter of the heat exchanger (and structured filling) 5.

The rotational speed of the shaft 6 can also depend on the volumetric capacity of the column 1, the nature of the compounds in the mixture to be distilled, and the quality objectives to be achieved in the distillation process.

The best rotational direction can be defined through preliminary pilot plant tests.

It is observed that with the structured filling 5 and the operating methods described above, distillation columns of limited dimensions (particularly in height) can be created, characterized by high fractionation yields, high quality of the separated fractions, low energy consumption, and high operational flexibility.

The operating conditions of the column 1 can be modified by adjusting the flow rate of the vapour fed into column 1, the speed, and the rotational direction of the shaft 6 in order to achieve the desired column head temperature.

Thanks to its distinguishing characteristics, the distillation column described above is particularly suitable for research and production activities in pharmaceutical chemistry, fine chemicals, biotechnology, and food industries (alcoholic distillates).

The distillation columns described above can be used, for example, to recover solvents contained in the process mixtures used in the pharmaceutical industry.

The distillation column described above is suitable for processing mixtures of considerable complexity due to the number of components or the thermolability of non-volatile components, operating under even high vacuum.

The process efficiency achieved by the distillation column described above also allows the use of suitable, yet modestly sized, units that can be installed at the plant's base, even in company areas reserved for core production activities, inside buildings with height restrictions, thus being better integrated into the production process.

The distillation column described above has proven to be very effective in the distillation of beverages obtained from alcoholic fermentation, where there is a need to minimize the content of compounds (even toxic ones) which negatively affect the olfactory or gustatory characteristics such as, for example, acetaldehyde, methanol, isoamyl alcohol, isobutyl alcohol, 2-methyl-1-butanol, methyl acetate, ethyl caprate and caprylate, acrolein, diacetyl and various esters.

The distillation column described above has also proven to be very effective in the distillation of perfume essences, where there is a need to remove unwanted organic compounds which can negatively affect the olfactory characteristics of the product (such as some terpenoid derivatives of terpenes).

In general, the distillation column 1 described above is particularly advantageous in the fractionation processes of complex mixtures, so as to allow extremely pure distillates with high process yields to be obtained.

Should it be desired to remove the liquid phases adhering to the structured filling 5, either for carrying out a cleaning operation or for process reasons, vapour or another hot fluid can be fed into the finned tubes for the time necessary to liquefy the deposits.

This facilitates the complete removal, by liquefaction and possibly also by evaporation, of residual liquid phases adhering to the fins which could contaminate subsequent distillation processes.

Of course, for complete cleaning of the distillation column, it must be internally flushed with vapour and/or suitable detergents must be introduced therein, particularly if the process fluids are fermentable.

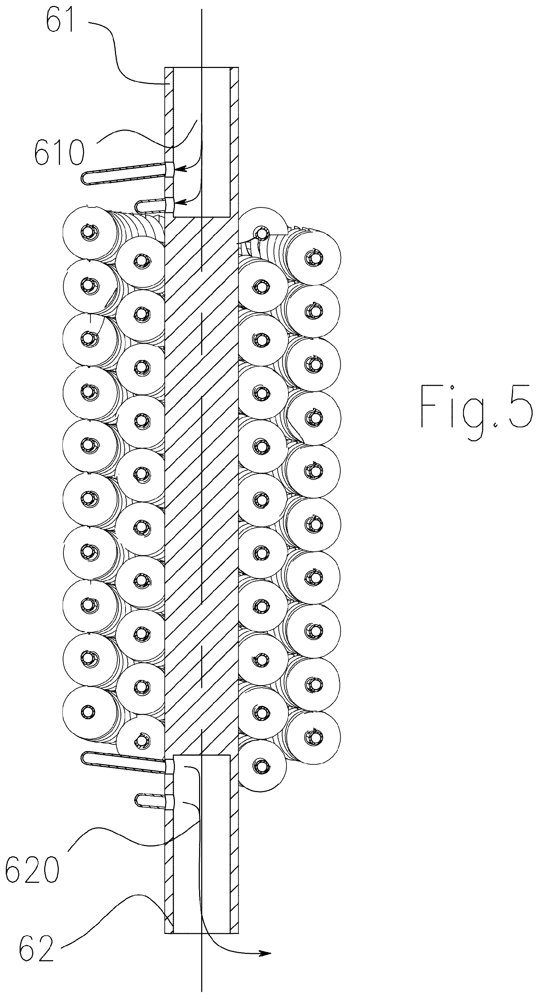

In a second embodiment, schematically illustrated in Figure 5, the container 10 of the column 1 may contain an n plurality of rotating heat exchangers 5 (for example, seven rotating heat exchangers, one of which is centrally located and six are arranged around the central heat exchanger).

In the example illustrated, the n heat exchangers 5 all rotate in the same direction and at the same rotational speed.

This embodiment is particularly suitable when it is desired to operate with large distillate flow rates.

It has been observed that the use of a plurality of small-diameter heat exchangers 5 allows to achieve better quality than the one that can be achieved using a single large-diameter heat exchanger.

### Example 1

An internal reflux distillation column 1 was prepared to carry out an intermittent (batch) distillation process.

The column comprises a rotating heat exchanger 5, which also serves as a structured rotating filler.

The rotating heat exchanger comprises a single metal tube, provided with a helical finning, which extends 4.5 mm high in a helical spiral around a central support shaft having a diameter of 60 mm.

The finned tube has a 37.7 m extension and a diameter of 12 mm.

The internal diameter of the column is approximately 150 mm.

The tube 501 is provided with a continuous helical finning 502, 12 mm high, 0.3 mm thick, and 5 mm pitch.

The fins are corrugated and inclined by approximately 15° compared to the axis of the tube 501.

The external diameter of the heat exchanger 5 is approximately 132 mm, the filling height approximately 4.5 m; the net filling volume approximately 49 litres; the total exposed surface area (fins 502 and tube 501) approximately 11.5 m².

During the tests, the heat exchanger 5 and the condenser 22 at the top of the column were fed with municipal water as a refrigeration fluid.

The water temperature was 22°C-23°C.

The column 1 was also prepared in order to rotate the heat exchanger and the structured filling 5 at a controlled variable speed, in the range of 30-120 rpm.

In any case, the rotation speed of the heat exchanger 5 must be such as to avoid the formation of emulsions in the liquid phase.

At a rotation speed of the heat exchanger 5 of 30 rpm, the overall length of the shear effect, produced by the edges of the fins 502 present in 1 dm³ of the device, is approximately 180 m/minute, which is obviously not uniform because it increases in length depending on the distance from the shaft 6.

When rotating at this speed, the overall shear effect produced by the fins 502 which are present in the volume they occupy, equal to 64 dm³, is exerted for a total length of 11,520 m/minute.

The rotation of exchanger 5 also significantly reduces the problem of residues stagnating inside the column (particularly on the fins) at the end of the process.

The boiler 110 was charged each time with a mixture of 15 litres of municipal water and 15 litres of methanol, using purchased methanol with a 99.5% purity.

When the mixture was brought to a boil, fractional distillation with rectification was performed, controlling the column head temperature in the range of 64.5-64.6°C (depending on the atmospheric pressure at the time of the tests), then adjusting the temperature of the distilled methanol vapour exiting the head of the column 12 by controlling the flow rate of the cooling water fed into the finned tube 50 of the heat exchanger 5.

The outlet temperature of the vapours from the head of column 12 was thus adjusted by indirect heat exchange to determine the maximum purity achievable for the distilled methanol during the tests at various speeds.

The collected distilled methanol samples were analyzed with a calibrated gas chromatograph using pure methyl alcohol samples for tests.

In a first series of tests, distilling with the heat exchanger 5 stationary (not rotating) according to the traditional procedure, concentrations of methanol of remarkable interest were obtained in the analyzed samples, which results were in any case expected and in line with the experiences acquired over the years with the non-rotating column (described in patent EP 0 513 704 B1).

The best result obtained was a residual water concentration in the distilled methanol of 0.2% by weight (99.8% methanol content).

In the subsequent distillations, the heat exchanger 5 was rotated, feeding water into the finned tube 50 under column head temperature control, operating at increased rotational speed (between 30 and 120 rpm), then at peripheral speeds of the fin edge of 0.207 m/s, 0.414 m/s, 0.621 m/s, and 1.242 m/s, respectively, collecting representative distillate samples for each operating mode.

HRGC (High-resolution gas chromatography) analysis revealed significantly improved distilled methanol concentrations.

The titer obtained in the tests was in fact 99.998% - 99.999%, even 100% in the test carried out at 70 rpm, also confirmed by Karl Fischer analysis, significantly improving compared to that of the purchased methanol (99.5%).

To further confirm the results already obtained with the pilot column built with a rotating heat exchanger 5 comprising a single finned tube 50 wound around the shaft 6, a second column was built using a shaft of the same diameter, 60 mm, for the rotating heat exchanger, to support two finned tubes 50, 50 wound overlapping each other on through the same height of 4.5 m, resulting in a total external diameter of 204 mm.

The fins, 12 mm high, 0.3 mm thick, were wound around two 12 mm diameter tubes, with a winding pitch of 7 mm.

Subsequently, further fractionation tests were carried out in sequence with the same 50% - 50% water-methanol mixture using this column, which confirmed the excellent performance of the previous tests, in particular by rotating the filling from 40 to 80 rpm (HRGC titre obtained 100%), obtaining doubled distillate flow rates and methanol titres all between 99.999% and 100%, also verified with a Karl Fischer titrator.

### Example 2

The same internal reflux distillation column 1 already described in Example 1, with the heat exchanger 5 having a single finned tube 50 wound around the shaft 6, was used to carry out a fractional distillation process of a mixture of 50% n-butonol and 50% isopropanol (percentages expressed by weight).

Operating with the heat exchanger 5 in static mode, an isopropanol concentration of 99.77% was obtained.

Operating with the heat exchanger 5 rotating (at 30, 50, and 60 rpm), the isopropanol concentration in the distilled product was again 100.00% (butanol was completely absent in the distillate).

### Schedule of Reference Numerals

| | |
|---|---|
| 1 | Distillation column |
| 10 | Metal container |
| 11 | Bottom or lower end of the metal container |
| 110 | Boiler or heater |
| 12 | Head or upper end of the metal container |
| 13 | Vapour inflow opening |
| 14 | Condensate outflow opening |
| 15 | Vapour outflow opening |
| 18 | Distillate inflow opening |
| 2 | Chamber |
| 20 | Distilled product tank |
| 21 | Heat exchanger to bring the mixture to be processed to the boil |
| 22 | Vapour condenser to condense the vapour exiting the distillation column |
| 31, 32 | Sealing members |
| 41, 42 | Shaft support members |
| 5 | Heat exchanger and structured filling (placed inside the column) |
| 50 | Finned tube |
| 501 | Central metal tube |
| 502 | Helical metal finning |
| 6 | Rotating shaft |
| 60 | Electric motor |
| 61 | First end or upper end of the rotating shaft |
| 62 | Second end or lower end of the rotating shaft |
| 610 | First ducts or blind axial hole (for the refrigeration fluid inflow) |
| 620 | Second duct or blind axial hole (for the refrigeration fluid outflow) |
| X | Development axis of the column 1, the container 10 and the shaft 6 |
| Pa | Pitch of the finning of the finned tube |
| Pe | Pitch of the helix of the finned tube wound along the axis X |
| Pr | Distribution pitch of the finned tubes which have a helical extension along a direction orthogonal to the axis X |
| Φ_{c} | Diameter of the metal tube |
| Φₜ | Total diameter of the finned tube |
| Pe | Pitch of the winding of the helical spiral |
| Pr | Pitch of distribution, along the axis X, of the finned tubes which develop in a helical spiral |

## Claims

1. An internal reflux distillation column (1) comprising
a container (10),
extending along a vertical axis (X),
which defines a chamber (2),
said container (10) having
a lower end (11) and an upper end (12);
a vapour inflow opening, placed near said lower end (11);
a condensate outflow opening, placed near said lower end (11);
a vapour outflow opening (15), placed near said upper end (12);
at least one temperature sensor for checking the temperature of the vapour leaving said outflow opening 15;
a vapour condenser (22) having a vapour inlet and a condensed product outlet for obtaining the distillate, said vapour inlet of said vapour condenser (22) being connected to said opening (15) for the vapour outflow from said distillation column;
a distillate inflow opening (18), placed near the top (12) of the column (1), to reflux at least one portion of the distillate leaving said vapour condenser (22) to the column;
at least one heat exchanger (5), placed in said chamber (2), for cooling the vapour upflowing in said chamber (2);
**characterized in that**
said heat exchanger (5) is adapted to rotate around said axis (X), and **in that**
a motor (60) is provided to rotate said heat exchanger (5) around said axis (X).

2. The distillation column according to claim 1, wherein said container (10) is not provided with the means to heat the wall of the container.

3. The distillation column according to claim 1 or 2, wherein said heat exchanger (5) is attached to a shaft (6), said shaft (6) comprising an inflow duct (610) for the inflow of the refrigeration fluid to said heat exchanger (5) and an outflow duct (620) for the outflow of the refrigeration fluid from said heat exchanger (5).

4. The distillation column according to claim 3, wherein said heat exchanger (5) is a heat exchanger adapted to operate in countercurrent.

5. The distillation column according to one of the preceding claims, comprising a device for regulating the rotational speed of said motor (60).

6. The distillation column according to one of the preceding claims, comprising a device for regulating the rotational direction of said motor (60).

7. The distillation column, according to one of the preceding claims, wherein said heat exchanger (5) comprises a finned tube (50), having a cylindrical helical spiral development extending along said vertical extension axis (X).

8. The distillation column, according to one of the preceding claims, wherein said heat exchanger (5) is attached to a shaft (6), extending along said axis (X), and wherein said first duct (610) and second duct (620) of said heat exchanger are made inside the shaft (6).

9. A method of fractional distillation using a distillation column (1) extending along a vertical axis (X) having a lower end (11) and an upper end (12), wherein
a reflux, even a partial one, of the distilled product into the column is provided and wherein a partial condensation process for condensing the rising vapours inside the column is provided by means of a heat exchanger placed inside the column and extending along said axis (X),
**characterised in that** the condensation process for condensing the vapours is obtained by means of a heat exchanger (5) rotating around said vertical axis (X).

10. The method according to claim 9, having an axis of rotation which is parallel to the development axis of the distillation column, said heat exchanger comprising a finned tube (50), having a cylindrical helical spiral development extending along said vertical development axis (X),
said finned tube being passed through by a refrigeration fluid that flows in countercurrent to the flow of vapours.
